# Europäisches Patentamt
# European Patent Office
# Office européen des brevets

(19)

(11) Veröffentlichungsnummer: **0 006 189**
**B1**

(12) **EUROPÄISCHE PATENTSCHRIFT**

(45) Veröffentlichungstag der Patentschrift: **15.04.81**

(21) Anmeldenummer: **79101803.9**

(22) Anmeldetag: **07.06.79**

(51) Int. Cl.³: **E 04 D 5/12, B 32 B 11/08**

(54) Verfahren zum Herstellen einer bituminierten Dachbahn.

(30) Priorität: **21.06.78 DE 2827136**

(43) Veröffentlichungstag der Anmeldung:
**09.01.80 Patentblatt 80/1**

(45) Bekanntmachung des Hinweises auf die Patenterteilung:
**15.04.81 Patentblatt 81/15**

(84) Benannte Vertragsstaaten:
**AT BE CH DE FR GB IT LU NL SE**

(56) Entgegenhaltungen:
CH - A - 115 056
FR - A - 750 526
FR - A - 1 433 453
FR - A - 2 015 904
FR - E - 78778/1 205 703
GB - A - 1 326 984
US - A - 1 551 318
US - A - 3 137 972

(73) Patentinhaber: **HOECHST AKTIENGESELLSCHAFT**
**Zentrale Patentabteilung Postfach 80 03 20**
**D-6230 Frankfurt/Main 80 (DE)**

(72) Erfinder: **Gessner, Wolfgang, Dr.**
**Im Hain 1**
**D-6233 Kelkheim (Taunus) (DE)**
Erfinder: **Kuhn, Helmut, Dr.**
**Am Erdbeerstein 30**
**D-6240 Königstein/Taunus (DE)**
Erfinder: **Plötz, Kurt**
**Langgasse 3b**
**D-6273 Waldems (DE)**

Courier Press, Leamington Spa, England.

Verfahren zum Herstellen einer bituminierten Dachbahn

Die Erfindung betrifft ein Verfahren zur Herstellung einer Dachbahn, die aus Vliesstoff, Metallfolie und Bitumen besteht und deren Metallfolie eine Dehnungsreserve in Form von Fältelungen besitzt.

Aus der US - A - 3 137 972 ist ein Bedachungsmaterial bekannt, das aus einer Filz-Grundbahn besteht, die mit Asphalt getränkt ist, und die mit einer mit Prägungen und Vertiefungen versehenen Aluminiumfolie kaschiert ist, welche quer zur Maschinenrichtung Erhebungen und Vertiefungen aufweist. Dieses Bedachungsmaterial wird durch Aufbringen der geprägten Aluminiumfolie auf die Filz-Grundbahn hergestellt.

Die FR - A - 1 433 453 beschreibt ebenfalls ein Bedachungsmaterial, das aus einer bituminierten Faserschicht und einer darauf kalandrierten Aluminiumfolie besteht. Dieses Mehrschichtengebilde ist dann mit Prägungen versehen. Sowohl in Kett- als auch in Schußrichtung des Textils kann die Dehnung des Gesamtgebildes durchschnittlich 40% betragen.

Die Herstellung dieser beiden bekannten Dachbahnen ist relativ aufwendig, weil zunächst entweder die Aluminiumfolie mit Prägungen versehen werden und dann auf den Filz kaschiert werden muß, oder weil das fertig laminierte Gebilde mit noch glatter Aluminiumfolie nachträglich durch Kalandrieren mit Prägungen versehen werden muß. Außberdem ist es nach den bekannten Verfahren nicht ohne weiteres möglich, über die gesamte Fläche des Bedachungsmaterials eine gleichmäßige Dehnungsreserve der Metallfolie zu erzielen.

Die Erfindung hat sich deshalb die Aufgabe gestellt, ein einfaches Verfahren zur Verfügung zu stellen, mit dessen Hilfe eine Dachbahn hergestellt werden kann, welche die bei der Verkleidung und Abdichtung schwieriger Stellen von Dächern und beim "Arbeiten" von Dächern auftretenden Verdehnungen aufnehmen kann, ohne daß die in der Dachbahn enthaltene Metallfolie reißt.

Durch diese Dachbahn wird der einzige Nachteil, den z.B. Polyester-Vliesstoffträger in der Dachbahn aufweisen, nämlich das Wegschmelzen des Trägers bei Temperaturen oberhalb seines Schmelzpunktes (260°C), aufgehoben. Diese Temperaturen werden durch Flugfeuer dann erbracht, wenn das Brennen nicht durch geeignete mineralische Zusätze und durch effiziente mineralische Abdeckung der obersten Bitumenbahn des Daches genügend eingedämmt wird. Ist der Polyesterträger z.B. auf einem Flachdach auch nur an einer Stelle weggeschmolzen, so hat der Sauerstoff freien Zutritt zu den unteren Dichtungs- und Dämmschichten und kann dadurch das Abbrennen derselben nicht genügend verhindern. Sollen mühsame Aufwendungen zur Erarbeitung von know-how über Bitumenzusammensetzung und -abdeckungen vermieden werden, und sollen die ausgezeichneten technologischen Eigenschaften von Polyester-Vliesstoffträgern erhalten bleiben, so kann dies nur durch einen Verbundstoff, wie er in dieser Anmeldung beschrieben ist, geschehen.

Diese Aufgabe wurde erfindungsgemäß dadurch gelöst, daß bei einem Verfahren nach dem Oberbegriff des Anspruches 1 zunächst eine Metallfolie (1) stellenweise auf einem schrumpffähigen Vliesstoff (2) befestigt wird, der in Heißluft einen Flächenschrumpf von 2—35% hat, daß danach der Flächenschrumpf des Vliesstoffes (2) ausgelöst wird, und daß anschließend bituminiert wird.

Als Vliesstoffe kommen alle bekannten Vliesmaterialien in Frage, d.h. solche aus Stapelfasern oder auch Filamenten. Bevorzugt sind Vliesstoffe aus synthetischem Fasermaterial, wie z.B. Polyamiden, Polyvinylalkohol oder Polyestern. Besonders bewährt haben sich als Fasermaterial Polyester, wie z.B. Polyethyleneterephthalat.

Die Vliesstoffe werden vor der Bituminierung mechanisch verfestigt, z.B. mit Hilfe eines Nadelstuhls; ebenso kann diese Verfestigung nach allen herkömmlichen Methoden thermisch erfolgen, beispielsweise durch Verkleben der in der Hitze an ihrer Oberfläche weichgewordenen Fasern; oder die Verfestigung erfolgt durch Binder oder Kleber. Sämtliche Verfestigungsmethoden können jeweils für sich allein oder in Kombination mit einer oder mehreren der anderen Verfestigungsmethoden angewandt werden, wie es Stand der Technik ist.

Als Metallfolie können alle handelsüblichen verwendet werden, wie Folien aus Kupfer, Zinn oder Aluminium. Vorzugsweise wird man wegen ihres geringen Preises Aluminiumfolie benutzen, obwohl Kupfer wegen seiner besseren Wärmeableitung gewisse Vorteile hat.

Vorteilhaft weist die Metallfolie eine Perforation auf, die für eine wenn auch nicht zu hohe Gasdurchlässigkeit bei der Kondensation des Binders (bei adhäsiver Nadelverfestigung) sorgt.

Sowohl die Metallfolie als auch der Vliesstoff sind bevorzugt mit einer Durchlöcherung versehen, die von einer Nadelung mit dem Nadelstuhl oder mit einer Nadelperforationsmaschine stammt. Auch diese Durchlöcherung dient dem besseren Eindringen von Kleber und Bitumen in den Vliesstoff sowie einer Gasdurchlässigkeit des Vliesstoffes und der Metallfolie.

Der Flächenschrumpf des Vliesstoffes (2) von 2—35% wird bei 200°C in Heißluft gemessen.

Nach einer bevorzugten Ausführungsform werden Metallfolie und Vliesstoff separat durch einen Nadelstuhl oder durch eine Nadelperforationsmaschine mit einer Nadelung bzw. Perforierung versehen.

Gemäß einer weiteren vorzugsweisen Variante werden Metallfolie und Vliesstoff gemeinsam mit Hilfe eines Nadelstuhls oder einer Nadelperforationsmaschine mit einer Nadelung bzw. Perforierung versehen.

Besonders vorteilhaft gestaltet sich das erfindungsgemäße Verfahren, wenn als Metallfolie Aluminiumfolie verwendet wird.

Ganz besonders bevorzugt werden die die Dehnungsreserve darstellenden Fältelungen vor dem Kalandern glattkalandert.

Die Metallfolie, die so gewählt wird, daß ihr Erweichungs- und ihr Schmelzpunkt möglichst hoch liegen, bleibt als unversehrte Schicht bei lokalem Flugfeuer erhalten und verhindert dadurch die Ausbreitung des Brandes in die unteren Schichten. Die Verhinderung dieser Brandausbreitung wird illusorisch, wenn in der nichtschmelzenden Schicht durch Dehnungen verursachte Risse und Spalten (hervogerufen durch die Spannungen beim Bituminierungsprozeß oder durch die in einem "arbeitenden" Dach aufgetretenen Spannungen) vorhanden sind. Die Dehnungsreserve der hochschmelzenden Schicht ist deshalb das entscheidende Kriterium, durch welches ein Träger einer bituminerten Dachbahn zum Nichtabbrennen eines solchen Daches, welches z.B. aufgrund der Eigenschaften eines Polyestervliesstoffträgers auf Jahrzehnte hinaus eine Dichtigkeit mit sich bringt, beitragen kann.

Das Aufbringen des Klebers erfolgt punktförmig. Enthält der dabei benutzte Klebstoff flüchtige Anteile, so ist es zweckmäßig, die Metallfolie vor der Kaschierung zu perforieren, oder Vliesstoff plus Metallfolie gemeinsam nach dem Kaschieren zu perforieren. Die Perforierung kann auch durch eine Nadelung auf einem Nadelstuhl ersetzt werden, wobei Nadeln mit oder ohne Bärten benutzt werden können. Eine Perforierung oder eine Nadelung ist insbesondere dann von Vorteil, wenn sich an die Kaschierung noch eine adhäsive Verfestigung anschließt. Kaschierung und adhäsive Nachverfestigung können auch durch den gleichen Arbeitsgang erfolgen. Der dabei benützte Binder kann flammhemmende Zusätze beinhalten.

Das gleiche wie für thermisch vorverfestigte Vliesstoffe gilt für adhäsiv vorverfestigte Vliesstoffe.

Bei mechanisch vorverfestigten Vliesstoffen kann im Prinzip dasselbe Vorgehen erfolgen, doch weisen diese Vliesstoffe gewöhnlich noch einen erheblichen Flächenschrumpf auf, der zu einer erheblichen Vereinfachung und Verbilligung des Verfahrens benutzt werden kann. Vernadelt man den mechanisch vorverfestigten Vliesstoff mit der Metallfolie und unterzieht den so entstandenen praktisch perforierten und schon eine feste Verbindung zwischen Vliesstoff und Metallfolie aufweisenden Verbundstoff einer adhäsiven Verfestigung mit anschließender Trocknung des Verbundstoffes und Kondensation des Binders, (der ebenfalls flammhemmende Mittel enthalten kann), so wird die Metallfolie durch das erhebliche Schrumpfen des Vliesstoffes bei den hohen Kondensations-temperaturen gezwungen, sich in allen Richtungen klein zu fälteln und so automatisch eine Dehnungsreserve zu ergeben. Die Nadelung ergibt eine wirre Vielpunktverfestigung, die die Bildung großer, durchgehender, die einwandfreie Bituminierung störender Falten verhindert. Während die Erreichung dieser wirren Vielpunktbefestigung bei der Kaschierung oft eine Spezialvorrichtung für den Bindeauftrag erfordert, kann dieser Effekt hier schon mit einem konventionellen Nadelstuhl erzielt werden. Diesem Verfahren wird deshalb wegen seiner Einfachheit zweifellos der Vorzug gegeben. Es kann nicht praktiziert werden, wenn der Flächenschrumpf des vorverfestigten Vliesstoffes in Heißluft bei 200°C unter 2% liegt und wird schwierig, wenn dieser Flächenschrumpf über 35% steigt. Der Längs- oder Querschrumpf des Vliesstoffes kann dabei je nach Herstellungsart des Vliesstoffes gleich sowie auch stark voneinander verschieden sein.

Auch die Dicke der Metallfolie unterliegt aus Preisgründen und aus technischen Gründen einer Begrenzung. Metallfolie über 150 $\mu$m Dicke erwirken eine zu schnelle Abnutzung der Nadelbärte und ein zu häufiges Brechen der Nadeln; Metallfolien unterhalb 3 $\mu$m sind für den rauhen Prozeß der Nadelung meist zu zerstörungsanfällig. Die Verteilung der auftretenden Fältelungen ist jedoch umso homogener, je dünner die Metallfolie gewählt wird. Die Dicke der Metallfolie ist deshalb auch von der gewählten Apparatur abhängig. Bei höheren mechanischen Beanspruchungen müssen dickere Folien gewählt werden. Treten Fältelungen auf, die so hoch sind, daß sie bei der Bituminierung störend wirken können, so kann der Verbundstoff kalandert oder zur gewünschten Dicke kalibriert werden. Eine Kalanderung der Kalibrierung kann zu einem dünneren Verbundstoff führen, der es gestattet, eine dünnere Dachbahn mit den gleichen technologischen Eigenschaften zu erhalten wie bei (infolge dickeren Trägern) dickeren und kostspieligeren Dachbahnen. Eine Kalanderung kann auch dazu dienen, die infolge zu niedrig gewählter Anzahl von Verbindungspunkten zwischen Vliesstoff und Metallfolie zu hoch geratenen Fältelungen einfach plattzudrücken. Symmetrisch angeordnete zu hohe Fältelungen können auf flüssiges und brennendes Bitumen kanalisierend einwirken und dadurch bei Schrägdächern die Ablaufgeschwindigkeit des brennenden Bitumens vergrößern und die Brandausbreitung dadurch beschleunigen.

Das verwandte Bitumen kann sowohl geblasenes, wie auch kautschuk-modifiziertes, mit ataktischem Polypropylen oder andersartig modifiziertes sein. Es kann auch flammhemmende Substanzen enthalten. Der Auftrag der Bitumenschichten muß auch den beiden Seiten des Verbundstoffes nicht gleich dick sein.

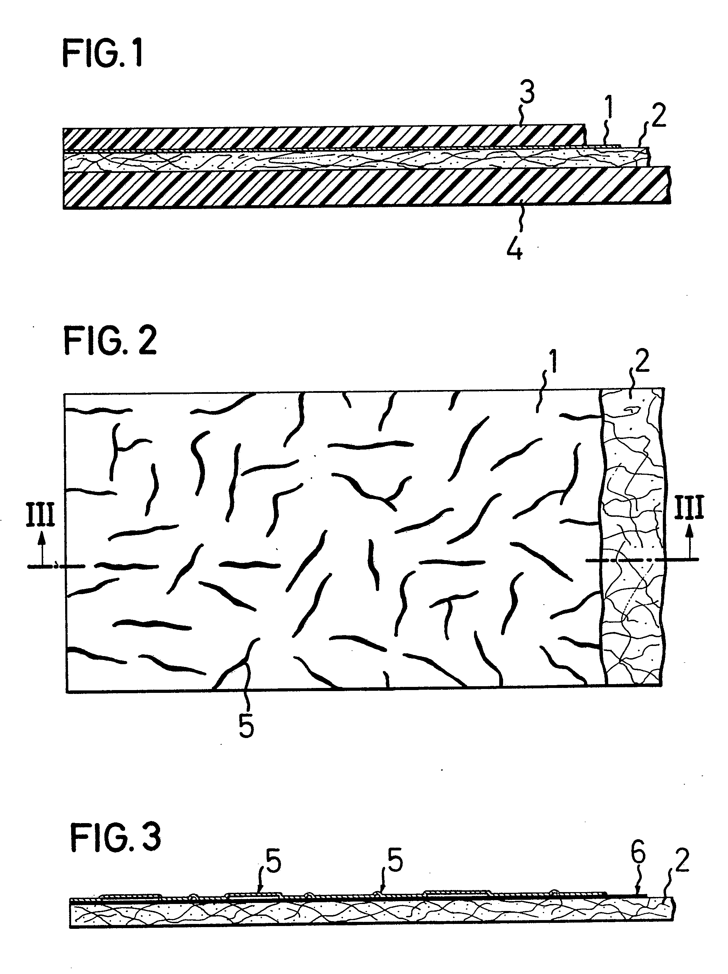

Figur 1 gibt einen Schnitt durch die erfindungsgemäß erhaltene Dachbahn wieder. Sie besteht aus der perforierten oder nicht perforierten Metallfolie 1, aus dem Vliesstoff 2 (hergestellt aus schwerentflammbaren oder normal brennbaren Fasern, vorzugsweise aus Polyesterfasern oder -filamenten), und aus den beiden Bitumenschichten 3 und 4.

Figur 2 ist eine Aufsicht auf die gefältete Folie 1. Sie stellt die Fältelung 5 der Metallfolie nach dem Schrumpfen eines mit ihr vernadelten oder punktförmig verklebten Vliesstoffes 2 dar.

Figur 3 zeigt einen Schnitt III—III in Figur 2 durch einen Verbundstoff ohne Bitumen. Der Verbundstoff besteht aus dem Vliesstoff 2 und der mit ihm punkt- oder linienförmig über die Klebeschicht 6 verbundenen Metallfolie 1, wobei die Fältelungen 5 noch nicht an den Vliesstoff angepreßt sind.

Zwei Beispiele sollen das unterschiedliche Verhalten von Verbundstoffen mit und ohne Dehnungsreserve veranschaulichen.

Beispiel 1

Ein Vliesstoff von 200 g/m² Flächengewicht, hergestellt aus Polyethylenterephthalat-Filamenten mit einem 200°C Heißluftschrumpf von 4% (bestimmt nach 10 minütiger Einwirkung im Trockenschrank) und einem Einzeltiter von 4 dtex wurde mit einer 20 μm dicken Aluminiumfolie mit 50 Nadelstichen/cm² auf einem Nadelstuhl verbunden, der so entstandene Verbundstoff mit einem Acrylatbinder imprägniert (20% Binderfestsubstanz—bezogen auf das Ausgangsgewicht des Vliesstoffes) und der Binder bei einer Temperatur von 200°C kondensiert. Die Dehnung des Verbundstoffes bis zum Reißen der Aluminiumfolie betrug im Mittel 13%. Durch beidseitiges Bituminieren wurde eine Dachbahn mit den hervorragenden, im Text beschriebenen, Eigenschaften erhalten.

Vergleichsbeispiel

Wie Beispiel 1, jedoch wurde der Vliesstoff vor dem Vernadeln einer Heißluftbehandlung unterworfen. Verbleibender Längs- und Querschrumpf: 0,4%.

Die Dehnung dieses Verbundstoffes bis zum Reißen der Aluminiumfolie betrug im Mittel 1,5%.

Die mit diesem Träger hergestellte Dachbahn zeigte nach der Bituminierung Risse in der Aluminiumeinlage. Zusätzlich Risse traten bei der Verarbeitung auf. Die gewünschte abschirmende Wirkung der Aluminiumfolie war somit verloren.

Die Dehnung der Verbundstoffproben wurde auf einem Instron-Gerät durchgeführt (schrittweise Dehnung nur jeweils 1%). Dabei war hinter der Probe eine starke Lichtquelle montiert, so daß jeder einzelne Nadeldurchstich und auch der kleinste Riß sichtbar wurde.

**Patentansprüche**

1. Verfahren zur Herstellung einer Dachbahn, die aus Vliesstoff *(2)*, Metallfolie *(1)* und Bitumen *(3)*, *(4)* besteht *und deren Metallfolie (1) eine Dehnungsreserve in Form von Fältelungen (5) besitzt,* dadurch gekennzeichnet, daß zunächst eine Metallfolie *(1) stellenweise* auf einem schrumpffähigen Vliesstoff *(2)* befestigt wird, der in Heißluft einen Flächenschrumpf von 2—35% hat, daß danach der Flächenschrumpf des Vliesstoffes *(2)* ausgelöst wird, und daß anschließend bituminiert wird.

2. Verfahren nach Anspruch 1, dadurch gekennzeichnet, daß die Metallfolie *(1)* durch Nadeln auf dem Vliesstoff *(2)* befestigt wird.

3. Verfahren nach Anspruch 1, dadurch gekennzeichnet, daß die Metallfolie *(1)* durch stellenweises Verkleben auf dem Vliesstoff *(2)* befestigt wird.

4. Verfahren nach Ansprüchen 1—3, dadurch gekennzeichnet, daß Metallfolio *(1)* und Vliesstoff *(2)* separat oder gemeinsam mit Perforierungen versehen werden.

5. Verfahren nach Ansprüchen 1—4, dadurch gekennzeichnet, daß die Metallfolie *(1)* eine Aluminiumfolie ist.

6. Verfahren nach Ansprüchen 1—5, dadurch gekennzeichnet, daß die durch das Schrumpfen des Vliesstoffes *(2)* entstandenen Fältelungen *(5)* der Metallfolie vor dem Bituminieren glatt kalandert werden.

**Revendications**

1. Procédé de fabrication d'une bande de couverture pour toitures formée d'un non-tissé (2), d'une feuille de métal (1) et de couches de bitume (3, 4) et dont la feuille de métal (1) possède une réserve d'allongement sous forme de plissures (5), procédé caractérisé en ce que l'on commence par fixer par places la feuille de métal (1) sur un non-tissé (2) rétrécissable, ayant dans de l'air chadu un retrait de surface de 2 à 35%, on provoque ensuite le retrait de surface du non-tissé puis on bitume l'ensemble.

2. Procédé selon la revendication 1, caractérisé en ce que la feuille de métal (1) est fixée sur le non-tissé (2) au moyen d'aiguilles.

3. Procédé selon la revendication 1, caractérisé en ce que la feuille de métal (1) est fixée sur le non-tissé (2) par un collage par places.

4. Procédé selon l'une quelconque des revendications 1 à 3, caractérisé en ce que la feuille de métal (1) et le non-tissé (2) sont pourvus de perforations, séparément ou ensemble.

5. Procédé selon l'une quelconque des revendications 1 à 4, caractérisé en ce que la feuille de métal (1) est une feuille d'aluminium.

6. Procédé selon l'une quelconque des revendications 1 à 5, caractérisé en ce que les plis (5) de la feuille de métal, formés par le retrait du non-tissé (2), sont aplatis par calandrage avant l'application du bitume.

## Claims

1. Process for the manufacture of a roof sheet, including a fleece (2), metal foil (1) and bitumen (3), (4) wherein the metal foil has an elongation reserve in form of wrinkles, characterized in that a metal foil (1) is attached at various points to the fleece (2) having a surface shrinkage in hot air of from 2 to 35 percent, and that thereafter the surface shrinkage of the fleece (2) is effected, and that subsequently there is bituminized.

2. Process as defined in claim 1, characterized in that the metal foil (1) is attached to the fleece (2) by needling.

3. Process as defined in claim 1, characterised in that the metal foil (1) is attached to the fleece (2) by adhesive at various points.

4. Process as defined in claims 1—3, characterized in that the metal foil (1) and the fleece (2) are perforated separately or together.

5. Process as defined in claims 1—4, characterized in that the metal foil (1) is an aluminum foil.

6. Process as defined in claims 1—5, characterized in that the wrinkles of the metal foil formed by the shrinkage of the fleece (2) are flattened by calendering prior to bituminization.

# FIG.1

# FIG. 2

# FIG.3